# EUROPÄISCHE PATENTSCHRIFT

(11) **EP 2 899 053 B1**
(45) Veröffentlichungstag und Bekanntmachung des Hinweises auf die Patenterteilung: **02.11.2016**
(21) Anmeldenummer: 14191737.7
(22) Anmeldetag: 04.11.2014
(51) Int. Cl.: B60K 35/00, B60H 1/00, G02B 27/01

(54) **HUD-Modul, Anordnung mit einem HUD-Modul, Fahrzeug**
HUD module, assembly comprising a HUD module, vehicle
Module UHD, système doté d'un module UHD, véhicule

(30) Priorität: 24.01.2014 DE 102014201311
(43) Veröffentlichungstag der Anmeldung: 29.07.2015
(73) Patentinhaber: Volkswagen Aktiengesellschaft, 38440 Wolfsburg (DE)
(72) Erfinder: Knauf, Ronny, 39343 Beendorf (DE); Weinstrauch, Ronald, 39579 Schinne (DE); Siegesmund, Dieter, 38162 Cremlingen (DE)

(56) Entgegenhaltungen:
- DE-A1-102011 055 156
- JP-A- S6 175 025
- JP-A- 2003 118 426
- JP-A- 2009 154 660

## Beschreibung

Die Erfindung betrifft ein HUD-Modul für ein Fahrzeug, insbesondere Kraftfahrzeug, mit einem Gehäuse, das zur zumindest bereichsweise Anordnung in einer einen Luftleitkanal aufweisenden Instrumententafel des Fahrzeugs ausgebildet ist. Ferner betrifft die Erfindung eine Anordnung mit einem HUD-Modul und mit einem durch eine Instrumententafel des Fahrzeugs geführten Luftleitkanal sowie ein Fahrzeug mit einer derartigen Anordnung.

Als Head-Up-Display (abgekürzt HUD) wird ein Anzeigesystem bezeichnet, bei dem für den Nutzer bestimmte Informationen in sein Haupt-Sichtfeld projiziert werden. Bei HUDs für Kraftfahrzeugführer kann die Information unmittelbar auf die Windschutzscheibe des Kraftfahrzeugs projiziert werden, oder sie wird auf eine gesonderte sogenannte Combiner-Scheibe projiziert. HUD-Module fassen ein oder mehrere Einzelkomponenten eines HUDs in einem Einbaumodul zusammen.

HUD-Module der eingangs genannten Art sowie entsprechende Anordnungen und Fahrzeuge sind aus dem Stand der Technik bekannt. So offenbart beispielsweise die Offenlegungsschrift DE 10 2005 031 357 A1 ein HUD-Modul mit einem Gehäuse, das in die Instrumententafel eines Kraftfahrzeugs integrierbar ist. Dazu ist dem Gehäuse eine Halterung zugeordnet. Unter HUD-Modulen (HUD = Head-Up-Display) sind Einrichtungen zu verstehen, die Informationen, wie beispielsweise die aktuelle Fahrzeuggeschwindigkeit oder Navigationshinweise, direkt in das Gesichtsfeld des Fahrzeugnutzers (insbesondere des Fahrzeugfahrers) projizieren, so dass diese Informationen vom Fahrzeugnutzer im Nahbereich abgelesen werden können, ohne den Blick von der Windschutzscheibe beziehungsweise dem Fahrgeschehen abzuwenden. In dem Gehäuse sind Komponenten für das HUD-Modul, wie insbesondere ein Projektor und/oder eine Optikeinrichtung, die beispielsweise einen Spiegel zum Umlenken des projizierten Bildes an die Windschutzscheibe oder an die Combiner-Scheibe umfasst, angeordnet und vor Einflüssen von außen geschützt.

Aus der gattungsbildenden Offenlegungsschrift DE 10 2011 055 156 A1 ist bereits ein HUD-Modul für ein Fahrzeug bekannt, bei welchem ein Gehäuse des Moduls einen Kanalwandabschnitt eines Luftleitkanals mitbildet. Weitere HUD-Module für Fahrzeuge sind noch aus den Offenlegungsschriften JP 2009 154660 A, JP 2003 118426 A und JP S61 75025 A bekannt.

Nachteilig bei den bekannten HUD-Modulen ist es, dass sie bei der Integration in die Instrumententafel des Fahrzeugs einen verhältnismäßig großen Bauraum in der Instrumententafel beanspruchen, der bedingt, dass Kabel- und/oder Luftleitkanäle, die durch die Instrumententafel geführt werden, konstruktiv umgelegt werden müssen. Insbesondere bei einer modularen Bauweise des Fahrzeugs, bei welcher ein HUD-Modul wahlweise vorsehbar ist, führt dies zu einem entsprechenden Mehraufwand.

Der Erfindung liegt somit die Aufgabe zugrunde, ein HUD-Modul, eine Anordnung mit einem HUD-Modul sowie ein Fahrzeug zu schaffen, die auf einfache und kostengünstige Art und Weise die Integration eines HUD-Moduls in eine Instrumententafel eines Fahrzeugs, das wenigstens einen Luftleitkanal aufweist, ermöglichen.

Die der Erfindung zugrunde liegende Aufgabe wird durch das HUD-Modul mit den Merkmalen des Anspruchs 1 gelöst. Durch die vorteilhafte Ausgestaltung des erfindungsgemäßen HUD-Moduls wird erreicht, dass weniger Bauraum für die Integration in die Instrumententafel benötigt wird und eine Verlegung des Luftleitkanals nicht oder zumindest nur im geringeren Ausmaß zur Integration des HUD-Moduls notwendig ist. Erfindungsgemäß wird dies dadurch erreicht, dass wenigstens eine Wand des Gehäuses des HUD-Moduls als Teilstück des durch die Instrumententafel geführten Luftleitkanals ausgebildet ist. Es ist also vorgesehen, dass das Gehäuse selbst ein Teilstück des Luftleitkanals bildet. Dadurch lässt sich der ursprüngliche Verlauf des Luftleitkanals zumindest im Wesentlichen erhalten. Zumindest wird dadurch erreicht, dass eine Wand des Gehäuses eine Doppelfunktion erhält, nämlich einerseits als Gehäusewand des HUD-Moduls und andererseits als Teilstück des Luftleitkanals, so dass eine kompakte Bauweise vorliegt, die zu den genannten Vorteilen führt.

Gemäß einer vorteilhaften Weiterbildung der Erfindung ist vorgesehen, dass das Teilstück als - im Querschnitt des Luftleitkanals gesehen - Kanalwandsegment ausgebildet ist. Die Wand des Gehäuses bildet also ein Kanalwandsegment, wodurch der Luftleitkanal im Querschnitt gesehen von zwei unterschiedlichen Bauteilen gebildet wird. Hierdurch ergibt sich der Vorteil, dass eine Integration in das bestehende System aus Instrumententafel mit Luftleitkanal sich einfach gestalten lässt, da das Teilstück beispielsweise - im Querschnitt gesehen - die verbleibende Wand des Luftleitkanals radial überlappen und dadurch bei der Montage auf einfache Art und Weise eine Abdichtung erzielt werden kann. Auch ist es denkbar, das von der Wand ausgebildete Teilstück passgenau bezüglich des Luftleitkanals beziehungsweise der verbleibenden Wand des Luftleitkanals auszubilden, und vorzugsweise an den Stirnflächen eine Nut-Feder-Verbindung auszubilden, die einerseits einen sicheren Halt und andererseits eine Abdichtung des Luftleitkanals gewährleistet.

Alternativ oder zusätzlich ist bevorzugt vorgesehen, dass das Teilstück zumindest abschnittsweise als Kanallängsabschnitt des Luftleitkanals ausgebildet ist. Der Kanallängsabschnitt zeichnet sich durch eine geschlossene Mantelwand aus, so dass in Längserstreckung gesehen der Luftleitkanal in einem Abschnitt vollständig durch die Gehäusewand des HUD-Moduls gebildet wird. Dies hat den Vorteil, dass die Dichtheit des Luftleitkanals im Bereich des Gehäuses optimal gewährleistet wird. Die Integration in den Luftleitkanal gestaltet sich jedoch etwas schwieriger, da an den Endöffnungen des durch das Gehäuse gebildeten Kanallängsabschnitts Anschlüsse für den unterbrochenen Luftleitkanal vorgesehen werden müssen, die eine einfache Verbindung gewährleisten. Die Anschlüsse können beispielsweise als elastisch verformbare Schlauchelemente ausgebildet sein, um eine einfache Integration zu ermöglichen.

Gemäß einer vorteilhaften Weiterbildung der Erfindung ist vorgesehen, dass das Teilstück in Längserstreckung gesehen strömungsoptimiert ausgebildet ist. Unter einer strömungsoptimierten Ausbildung ist eine Formgebung des Teilstücks zu verstehen, die zu möglichst wenigen Turbulenzen führt und die Strömung der Luft durch den Luftleitkanal möglichst wenig behindert oder beeinflusst. Die Integration des HUD-Moduls in die Instrumententafel kann zwar zur Folge haben, dass der Durchströmungsquerschnitt des Luftleitkanals im Bereich des Gehäuses geringfügig kleiner ausfällt. Durch eine strömungsoptimierte Ausbildung des Teilstücks wird jedoch erreicht, dass sich der verringerte Durchströmungsquerschnitt nur geringfügig auf die Gesamtleistung des Lüftungssystems auswirkt.

Erfindungsgemäß weist das Gehäuse wenigstens eine Rückwand und wenigstens eine Seitenwand auf, die aneinander angrenzen und zusammen das Teilstück bilden. Das Gehäuse kann dadurch noch weiter in den Luftkanal hineinragend angeordnet werden, wobei dann auch bevorzugt zwei gegenüberliegende Seitenwände das Teilstück mit bilden, um den Luftstrom an dem Gehäuse strömungsoptimiert zu führen.

Die erfindungsgemäße Anordnung mit den Merkmalen des Anspruchs 4 mit einem HUD-Modul und mit einem durch eine Instrumententafel eines Fahrzeugs führenden Luftleitkanal zeichnet sich dadurch aus, dass der Luftleitkanal eine Aussparung aufweist und dass das HUD-Modul erfindungsgemäß ausgebildet ist, wobei das Teilstück des HUD-Moduls die Aussparung des Luftleitkanals verschließt. Hierdurch ergibt sich eine kompakte und bauraumsparende Anordnung des HUD-Moduls in der Instrumententafel, ohne dass ein Verlegen des Luftleitkanals notwendig ist. Wird das HUD-Modul nachträglich in dem Fahrzeug montiert, so reicht es aus, den Luftleitkanal teilweise zu entfernen, beispielsweise indem ein Segment herausgeschnitten wird, das dann durch das Teilstück des HUD-Moduls ersetzt wird.

Das erfindungsgemäße Fahrzeug mit den Merkmalen des Anspruchs 7 weist eine Instrumententafel und eine Anordnung mit einem HUD-Modul und mit einem Luftleitkanal auf, die zumindest bereichsweise in der Instrumententafel angeordnet sind, und zeichnet sich dadurch aus, dass die Anordnung erfindungsgemäß ausgebildet ist. Es ergeben sich hierdurch die bereits genannten Vorteile.

Im Folgenden soll die Erfindung anhand der Zeichnung näher erläutert werden. Dazu zeigen
- Figur 1: eine Draufsicht auf eine Instrumententafel eines Kraftfahrzeugs,
- Figur 2: eine schematische Schnittdarstellung durch die Instrumententafel der Fig. 1 im Bereich eines HUD-Moduls,
- Figur 3: ein Gehäuse des HUD-Moduls der Fig. 2 in einer perspektivischen Darstellung und
- Figur 4: eine Halteeinrichtung für das Gehäuse der Fig. 3 in einer perspektivischen Darstellung.

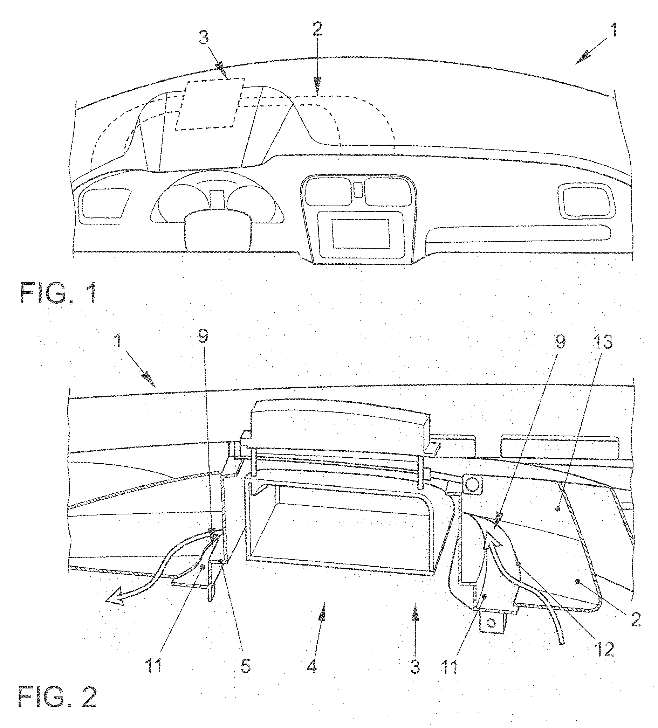

Figur 1 zeigt in einer vereinfachten Draufsicht eine Instrumententafel 1 eines Kraftfahrzeugs. Durch die Instrumententafel 1 des Kraftfahrzeugs verläuft ein Luftleitsystem für die Frischluftzufuhr des Kraftfahrzeugs, wobei das Luftleitsystem wenigstens einen Luftleitkanal 2 aufweist, der in Figur 1 gestrichelt angedeutet ist. Weiterhin weist das Kraftfahrzeug zum Darstellen von Informationen, wie beispielsweise aktuelle Fahrzeugzustände oder Navigationshinweise, ein HUD-Modul (HUD = Head-Up-Display) auf, das wie der Luftleiterkanal 2 in die Instrumententafel 1 integriert und daher in Figur 1 nur gestrichelt angedeutet ist. Die Strichelungen für den Luftleitkanal 2 und das HUD-Modul 3 zeigen jedoch den Zielkonflikt eines derartigen Systems, bei welchem das HUD-Modul 3 üblicherweise an einer Stelle anzuordnen ist, an welcher auch der Luftkanal 2 verläuft. Im Folgenden wird eine Lösung beschrieben, die es ermöglicht, das HUD-Modul 3 zu integrieren, ohne dass der Luftleitkanal 2 verlegt werden muss, so dass auch eine Einfügung des HUD-Moduls 3 in die bestehende Konstruktion der Instrumententafel 1 auf einfache Art und Weise möglich ist.

Figur 2 zeigt hierzu eine Schnittdarstellung durch die Instrumententafel 2 im Bereich des HUD-Moduls 3. Von dem HUD-Modul 3 ist vorliegend nur ein kleiner Teil dargestellt. Üblicherweise weist das HUD-Modul ein Display oder einen Projektor zum Darstellen der Informationen sowie eine Optik 4, insbesondere mit einem oder mehreren Spiegeln auf, die das Bild des Displays beziehungsweise des Projektors auf die Windschutzscheibe des Kraftfahrzeugs oder auf eine sogenannte Combiner-Scheibe wirft. Vorliegend ist aus Übersichtlichkeitsgründen lediglich ein Teil der Optik 4 dargestellt, die in einem Gehäuse 5 des HUD-Moduls angeordnet ist.

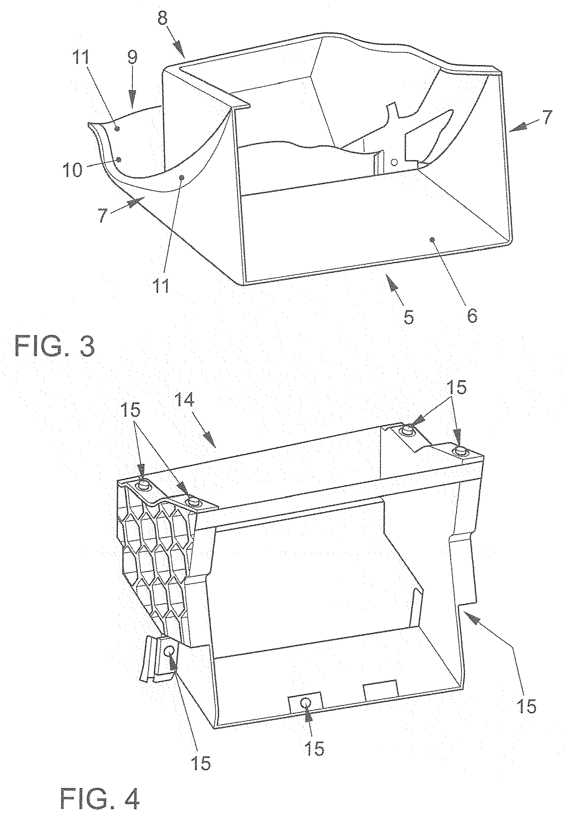

Figur 3 zeigt das Gehäuse 5 in einer perspektivischen Darstellung. Das Gehäuse 5 weist im Wesentlichen einen Boden 6, zwei einander gegenüberliegende Seitenwände 7 sowie eine Rückwand 8 auf. Die Seitenwände 7 und die Rückwand 8, im Folgenden als die Wände des Gehäuses 5 bezeichnet, bilden ein Teilstück 9 des Luftleitkanals 2. Dazu bilden die Wände zusammen einen nach außen weisenden Randabschnitt 10, der wie in Figur 2 dargestellt, dazu ausgebildet ist, ein Kanalwandsegment 11 des Luftleitkanals 2 zu bilden.

Der Luftleitkanal 2 ist im Bereich des HUD-Moduls 3 aufgeschnitten, so dass ihm sozusagen ein Wandsegment fehlt. In die dadurch verbleibende Aussparung 12 wird das HUD-Modul beziehungsweise dessen Gehäuse 5 derart eingesetzt, dass der Randabschnitt 10 des Gehäuses 5 das verbleibende Kanalwandsegment 13 des Luftleitkanals 2 in die Instrumententafel 1 hintergreift. Mit anderen Worten sind das Gehäuse 5 und der Luftkanal 2 durch das Teilstück 9 überlappend angeordnet, wobei der Randabschnitt 10 bevorzugt dichtend an der Außenseite des Kanalwandsegments 13 anliegt.

Das Teilstück 9 des Luftleitkanals 2, das durch den Randabschnitt 10 des Gehäuses 5 gebildet wird, ersetzt somit das entfernte Kanalwandsegment des Luftleitkanals 2 vollständig. Das Gehäuse 5 des HUD-Moduls 3 übernimmt somit eine Doppelfunktion. Einerseits schützt es die in dem Gehäuse 5 angeordneten Bestandteile des HUD-Moduls, und andererseits bildet es einen Teil des Luftleitkanals 2.

Hierdurch wird insgesamt erreicht, dass bei der Integration des HUD-Moduls 3 in die Instrumententafel 1 der Luftleitkanal 2 nicht vollständig verlegt werden muss. Vielmehr wird eine Strömungsbahn, hier in der Fig. 2 durch Strömungspfeile dargestellt, durch die Integration des HUD-Moduls 3 geringfügig beeinflusst. Je nach Größe des verwendeten HUD-Moduls 3 wird dabei die Strömungsbahn mehr oder weniger stark beeinflusst. Durch eine strömungsoptimierte Ausbildung der das Teilstück 9 bildenden Wände 7, 8 des Gehäuses 5 wird gewährleistet, dass der Luftstrom durch den Luftleitkanal 2 auch weiterhin ohne allzu große Strömungsverluste fließt.

Zur Anordnung des HUD-Moduls 3 in der Instrumententafel ist bevorzugt eine Halteeinrichtung 14 vorgesehen (in Figur 2 nicht dargestellt), wie sie in Figur 4 in einer perspektivischen Darstellung gezeigt ist. Die Halteeinrichtung 14 ist käfigartig ausgebildet und dient zur Aufnahme wesentlicher Bereiche des Gehäuses 5. Mittels Verschraubungen 15 ist die Halteeinrichtung 14 an der Instrumententafel 1 montierbar. Das Gehäuse 5 kann in der Halteeinrichtung 14 zum einen formschlüssig gehalten sein, und zum anderen mittels weiterer Verschraubungen befestigt werden.

An dem Gehäuse 5 und/oder der Halteeinrichtung 14 können beispielsweise auch eine sogenannte Combiner-Scheibe und/oder ein Deckel, beispielsweise mit einer entsprechenden Deckelkinematik zu dessen Betätigung, befestigt/angeordnet sein. Das Gehäuse 5 versteift dabei den Bereich der Schalttafel an der Instrumententafel 1, der durch die hinzugefügte Öffnung für das HUD-Modul 3 geschwächt wurde.

Die vorteilhafte Anordnung 16 aus Luftleitkanal 2 und HUD-Modul 3, bei welcher ein Abschnitt des Luftleitkanals 2 - im Querschnitt gesehen - durch ein Kanalwandsegment 13 des ursprünglichen Luftleitkanals 2 sowie durch ein Kanalwandsegment 11 des Gehäuses 5 gebildet wird, hat den Vorteil, dass das HUD-Modul 3 bauraumsparend in die Instrumententafel 1 integrierbar ist und ein vollständiges Verlegen des Luftleitkanals 2 vermeidbar ist. Dadurch, dass der Luftleitkanal 2 nunmehr abschnitts- und segmentweise durch das Gehäuse 5 des HUD-Moduls 3 gebildet wird, wird darüber hinaus gewährleistet, dass auch Komponenten des HUD-Moduls 3 auf einfache Art und Weise durch den geführten Luftstrom temperiert, insbesondere gekühlt werden können.

## Patentansprüche

1. HUD-Modul (3) für ein Fahrzeug, insbesondere Kraftfahrzeug, mit einem Gehäuse (5), das zur zumindest bereichsweisen Anordnung in einer einen Luftleitkanal (2) aufweisenden Instrumententafel (1) des Fahrzeugs ausgebildet ist, wobei wenigstens eine Wand (7, 8) des Gehäuses (5) als Teilstück (9) des Luftleitkanals (2) ausgebildet ist, **dadurch gekennzeichnet, dass** das Gehäuse (5) wenigstens eine Rückwand (8) und wenigstens eine Seitenwand (7) aufweist, die aneinander angrenzen und zusammen das Teilstück (9) des Luftleitkanals (2) bilden, wobei dazu die wenigstens eine Rückwand (8) und die wenigstens eine Seitenwand (7) einen nach außen weisenden Randabschnitt (10) als Kanalwandsegment (11) bilden.

2. HUD-Modul nach dem vorhergehenden Anspruch, **dadurch gekennzeichnet, dass** das Teilstück (9) als Kanallängsabschnitt des Luftleitkanals (2) ausgebildet ist.

3. HUD-Modul nach einem der vorhergehenden Ansprüche, **dadurch gekennzeichnet, dass** das Teilstück (9) in Längserstreckung gesehen strömungsoptimiert ausgebildet ist.

4. Anordnung (16) mit einem HUD-Modul (3) und mit einem durch eine Instrumententafel (1) eines Fahrzeugs, insbesondere Kraftfahrzeugs, geführten Luftleitkanal (2), **gekennzeichnet durch** eine Aussparung (12) in dem Luftleitkanal (2) und die Ausbildung des HUD-Moduls (3) nach einem oder mehreren der vorhergehenden Ansprüche, wobei das Teilstück (9) des HUD-Moduls (3) die Aussparung (12) des Luftleitkanals (2) verschließt.

5. Anordnung nach Anspruch 4, **dadurch gekennzeichnet, dass** der Randabschnitt (10) ein Kanalwandsegment (13) des Luftleitkanals (2) hintergreift.

6. Anordnung nach Anspruch 4 oder 5, **dadurch gekennzeichnet, dass** der Randabschnitt (10) dichtend an einer Außenseite des Kanalwandsegments (13) anliegt.

7. Fahrzeug, insbesondere Kraftfahrzeug, mit einer Instrumententafel (1) und mit einer Anordnung (16), die ein HUD-Modul (3) und einen durch die Instrumententafel (1) geführten Luftleitkanal (2) aufweist, **gekennzeichnet durch** die Ausbildung der Anordnung nach einem der Ansprüche 4 bis 6.

## Claims

1. HUD module (3) for a vehicle, in particular motor vehicle, having a housing (5) which is designed for being arranged at least regionally in an instrument panel (1) of the vehicle, which instrument panel has an air-guiding duct (2), wherein at least one wall (7, 8) of the housing (5) is formed as a part (9) of the air-guiding duct (2), **characterized in that** the housing (5) has at least one rear wall (8) and at least one side wall (7) which adjoin one another and which together form the part (9) of the air-guiding duct (2), wherein, for this purpose, the at least one rear wall (8) and the at least one side wall (7) form an outwardly pointing edge section (10) as a duct wall segment (11).

2. HUD module according to the preceding claim, **characterized in that** the part (9) is formed as a duct longitudinal section of the air-guiding duct (2).

3. HUD module according to one of the preceding claims, **characterized in that** the part (9) is of flow-optimized form as viewed in longitudinal extent.

4. Arrangement (16) having an HUD module (3) and having an air-guiding duct (2) led through an instrument panel (1) of a vehicle, in particular motor vehicle, **characterized by** a cutout (12) in the air-guiding duct (2) and by the embodiment of the HUD module (3) according to one or more of the preceding claims, wherein the part (9) of the HUD module (3) closes the cutout (12) of the air-guiding duct (2).

5. Arrangement according to Claim 4, **characterized in that** the edge section (10) engages behind a duct wall segment (13) of the air-guiding duct (2).

6. Arrangement according to Claim 4 or 5, **characterized in that** the edge section (10) bears sealingly against an outer side of the duct wall segment (13).

7. Vehicle, in particular motor vehicle, having an instrument panel (1) and having an arrangement (16) which has an HUD module (3) and has an air-guiding duct (2) led through the instrument panel (1), **characterized by** the embodiment of the arrangement according to one of Claims 4 to 6.

## Revendications

1. Module d'affichage tête haute (HUD) (3) pour un véhicule, en particulier un véhicule automobile, comprenant un boîtier (5), qui est réalisé pour être disposé au moins en partie dans un tableau de bord (1) du véhicule présentant un canal de guidage d'air (2), au moins une paroi (7, 8) du boîtier (5) étant réalisée sous forme de pièce partielle (9) du canal de guidage d'air (2), **caractérisé en ce que** le boîtier (5) présente au moins une paroi arrière (8) et au moins une paroi latérale (7), qui sont adjacentes l'une à l'autre et qui forment ensemble la pièce partielle (9) du canal de guidage d'air (2), l'au moins une paroi arrière (8) et l'au moins une paroi latérale (7) formant pour cela une portion de bord (10) orientée vers l'extérieur en tant que segment de paroi de canal (11).

2. Module HUD selon la revendication précédente, **caractérisé en ce que** la pièce partielle (9) est réalisée sous forme de portion longitudinale de canal du canal de guidage d'air (2).

3. Module HUD selon l'une quelconque des revendications précédentes, **caractérisé en ce que** la pièce partielle (9) est réalisée de manière optimisée du point de vue de l'écoulement, vu dans la direction longitudinale.

4. Agencement (16) comprenant un module HUD (3) et un canal de guidage d'air (2) guidé à travers un tableau de bord (1) d'un véhicule, en particulier d'un véhicule automobile, **caractérisé par** un évidement (12) dans le canal de guidage d'air (2) et par la réalisation du module HUD (3) selon l'une quelconque ou plusieurs des revendications précédentes, la pièce partielle (9) du module HUD (3) fermant l'évidement (12) du canal de guidage d'air (2).

5. Agencement selon la revendication 4, **caractérisé en ce que** la portion de bord (10) vient en prise par l'arrière avec un segment de paroi de canal (13) du canal de guidage d'air (2).

6. Agencement selon la revendication 4 ou 5, **caractérisé en ce que** la portion de bord (10) s'applique de manière hermétique contre un côté extérieur du segment de paroi de canal (13).

7. Véhicule, en particulier véhicule automobile, comprenant un tableau de bord (1) et un agencement (16) qui présente un module HUD (3) et un canal de guidage d'air (2) guidé à travers le tableau de bord (1), **caractérisé par** la réalisation de l'agencement selon l'une quelconque des revendications 4 à 6.
